# EUROPEAN PATENT SPECIFICATION

(11) **EP 3 680 514 B1**
(45) Date of publication and mention of the grant of the patent: **03.11.2021**
(21) Application number: 18853122.2
(22) Date of filing: 06.09.2018
(51) Int. Cl.: F16H 7/12, F16H 7/08

(54) **TENSIONER UNIT FOR ENGINE ACCESSORY BELT**
SPANNEREINHEIT FÜR HILFSMASCHINENBAND
ENSEMBLE TENDEUR POUR COURROIE DE MACHINE AUXILIAIRE

(30) Priority: 07.09.2017 JP 2017171878
(43) Date of publication of application: 15.07.2020
(73) Proprietor: NTN Corporation, Osaka-shi, Osaka 550-0003 (JP)
(72) Inventor: TANAKA, Tadahisa, Iwata-shi Shizuoka 438-8510 (JP)
(74) Representative: Grünecker Patent- und Rechtsanwälte PartG mbB
(86) International application number: PCT/JP2018/033059
(87) International publication number: WO 2019/049936

(56) References cited:
- JP-A- H 084 860
- JP-A- H10 213 195
- JP-A- H10 213 195
- JP-A- 2001 208 153
- JP-A- 2011 106 483

## Description

### TECHNICAL FIELD

The present invention relates to a tensioner unit mainly used to maintain the tension of an engine accessory belt for driving engine accessories such as an alternator and a water pump.

### BACKGROUND ART

Automotive engine accessories such as an alternator, an air conditioner and a water pump have rotary shafts coupled to the crankshaft of the engine through an engine accessory belt, and driven through the engine accessory belt. A tensioner unit is generally used to maintain the tension of the engine accessory belt within a proper range.

A tensioner unit for an engine accessory belt is illustrated in Fig. 6 of the below-identified Patent Document 1, which includes a pivot arm supported to be pivotable about a fulcrum shaft; a tension pulley supported by the pivot arm such that, when the pivot arm pivots, the tension pulley moves about the fulcrum shaft together with the pivot arm; and a hydraulic auto-tensioner. The hydraulic auto-tensioner has its lower end pivotally coupled to a fixed shaft fixed to an engine block, and has its upper end pivotally coupled to the pivot arm.

As illustrated in Fig.1 of Patent Document 1, the hydraulic auto-tensioner includes, between its upper and lower ends, a compression coil spring for biasing the pivot arm in one pivot direction (direction in which the tension pulley presses the belt); and a hydraulic damper for dampening the pivoting motion of the pivot arm in the other pivot direction, such that the hydraulic damper is arranged coaxially with the compression coil spring.
Patent document 2 provides a further example of an automatic tensioner.

### PRIOR ART DOCUMENTS

### Patent documents

Patent document 1: Japanese Unexamined Patent Application Publication No. 2012-241794
Patent document 2: JP H08 4860 A

### SUMMARY OF THE INVENTION

### PROBLEMS TO BE SOLVED BY THE INVENTION

In recent years, the layout of the engine accessory belt is altered to reduce the size of the engine, and as a result, it is required to reduce the installation space for a tensioner unit for applying tension to the engine accessory belt.

However, a large installation space is necessary for a conventional tensioner unit for an engine accessory belt when seen from its front side. This is because (i) as illustrated in Fig. 6 of Patent Document 1, the hydraulic auto-tensioner and the pivot arm are separate members, and (ii) the compression coil spring for biasing the pivot arm, and the hydraulic damper for dampening the pivoting motion of the pivot arm are mounted as an integral mechanism between the upper and lower ends of the hydraulic auto-tensioner, so that this hydraulic auto-tensioner has a large vertical dimension.

It is an object of the present invention to provide a tensioner unit for an engine accessory belt that requires a smaller installation space.

### MEANS FOR SOLVING THE PROBLEMS

The present invention is defined in independent claim 1. Preferred embodiments are laid down in the dependent claims.

In order to achieve the above object, the present invention provides a tensioner unit disclosing the features of claim 1.

In this arrangement, since the compression coil spring for biasing the pivot arm, and the hydraulic damper for dampening the pivoting motion of the pivot arm are separately mounted to the pivot arm, it is possible to reduce the installation space for the tensioner unit when seen from its front side. Also, since a compression coil spring is used as the spring for biasing the pivot arm, and the biasing force of a compression coil spring is generally larger than the basing force of a torsion coil spring, it is possible to easily ensure a large pressing force required in the tensioner unit compared to the case where a torsion coil spring is used to bias the pivot arm.

Since the plurality of compression coil springs disposed around the fulcrum shaft so as to be circumferentially spaced apart from each other bias the pivot arm individually and independently of each other, it is possible to reduce the sizes of the individual compression coil springs. As a result, it is possible to effectively reduce the installation space for the tensioner unit when seen from its front side, while ensuring a large pressing force required in the tensioner unit.

The hydraulic damper, and either the compression coil spring or the plurality of compression coil springs are preferably disposed on a common plane orthogonal to the fulcrum shaft.

With this arrangement, it is possible to reduce the thickness of the tensioner unit in the axal direction of the fulcrums shaft, even though a compression coil spring or springs are used, which generally require a larger installation space or spaces than a torsion coil spring or springs.

The hydraulic damper may comprise a tubular damper cylinder provided to the pivot arm such that, when the pivot arm pivots, the tubular damper cylinder moves about the fulcrum shaft together with the pivot arm; a piston slidably inserted in the tubular damper cylinder so as to partition an interior of the tubular damper cylinder into a hydraulic chamber and a reservoir chamber; and a damper rod having one end thereof connected to the piston, and having the other end abutting against the damper abutment pin.

The pivot arm preferably includes, in an interior of the pivot arm, a sub-reservoir chamber adjacent to the reservoir chamber in a direction orthogonal to a longitudinal direction of the tubular damper cylinder; and a communication path through which the sub-reservoir chamber communicates with the reservoir chamber.

With this arrangement, since it is possible to reduce the length of the hydraulic damper, it is possible to effectively reduce the installation space for the tensioner unit when seen from its front side.

Also, the tension pulley may be axially opposed to the pivot arm; the pivot arm may include a pulley shaft protruding from a surface of the pivot arm opposed to the tension pulley toward the tension pulley; and the tensioner unit may further comprise a rolling bearing mounted to an outer periphery of the pulley shaft so as to rotatably support the tension pulley.

With this arrangement, since the tension pulley overlaps with the pivot arm when the tensioner unit is seen from its front side, it is possible to effectively reduce the installation space for the tensioner unit when seen from its front side.

The tensioner unit preferably further comprises a bracket to which the damper abutment pin, and either the spring abutment pin or the plurality of spring abutment pins are fixed.

With this arrangement, it is possible to easily attach the tensioner unit to an engine block by simply fixing the bracket to the engine block without separately fixing the spring abutment pin(s) and the damper abutment pin to the engine block.

### EFFECTS OF THE INVENTION

In the tensioner unit of the present invention, since the compression coil spring(s) for biasing the pivot arm, and the hydraulic damper for dampening the pivoting motion of the pivot arm are separately mounted to the pivot arm, it is possible to reduce the installation space for the tensioner unit when seen from its front side.

### BRIEF DESCRIPTION OF THE DRAWINGS

Fig. 1 is a front view of a belt transmission device using a tensioner unit for an engine accessory belt embodying the present invention.
Fig. 2 is an enlarged view illustrating the tensioner unit of Fig. 1 and its vicinity.
Fig. 3 is an exploded perspective view of the tensioner unit of Fig. 2.
Fig. 4 is a sectional view taken along line IV-IV of Fig. 2.
Fig. 5 is a partially cutaway right-hand side view of the tensioner unit illustrated in Fig. 2.
Fig. 6 is a sectional view taken along line VI-VI of Fig. 5.
Fig. 7 is a sectional view taken along line VII-VII of Fig. 6.
Fig. 8 is a sectional view taken along line VIII-VIII of Fig. 6.

### BEST MODE FOR CARRYING OUT THE INVENTION

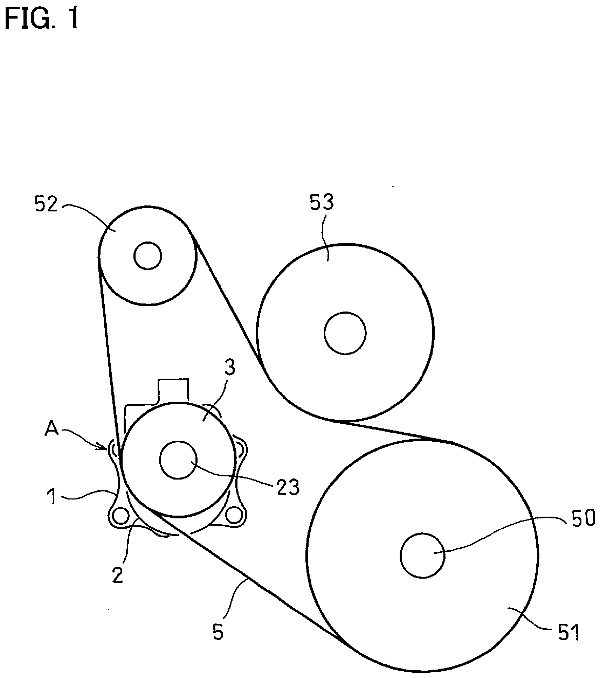

Fig. 1 exemplifies a belt transmission device using a tensioner unit A for an engine accessory belt embodying the present invention. The belt transmission device includes a crank pulley 51 attached to a crankshaft 50; a belt 5 trained around the crank pulley 51; an alternator 52 and a water pump 53 both coupled to the crank pulley 51 through the belt 5; and the tensioner unit A. The tensioner unit A applies tension to the belt 5 by pressing the belt 5. The alternator 52 and the water pump 53 are automotive engine accessories. The belt 5 is an engine accessory belt through which the rotation of the crankshaft 50 is transmitted to the engine accessories (alternator 52 and water pump 53).

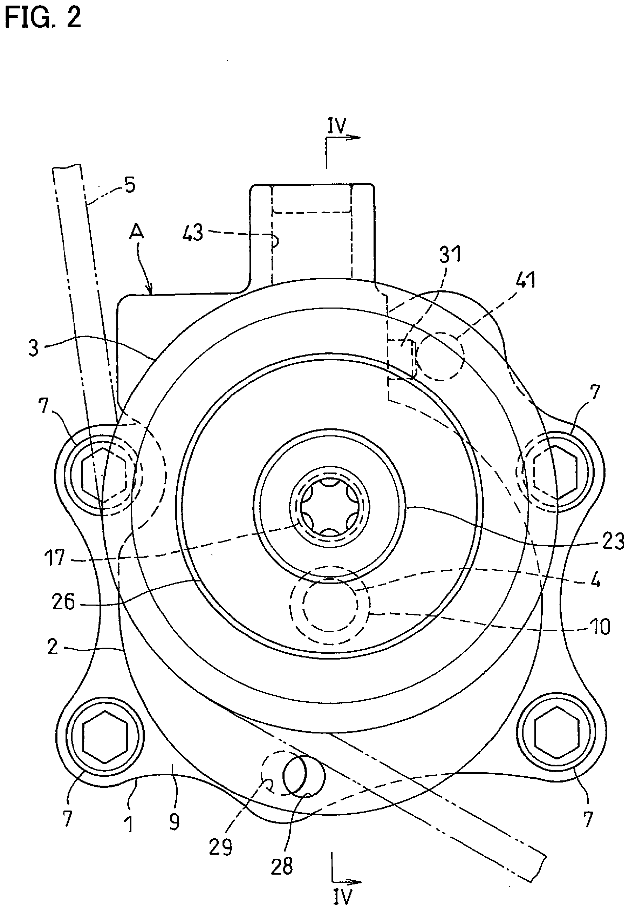

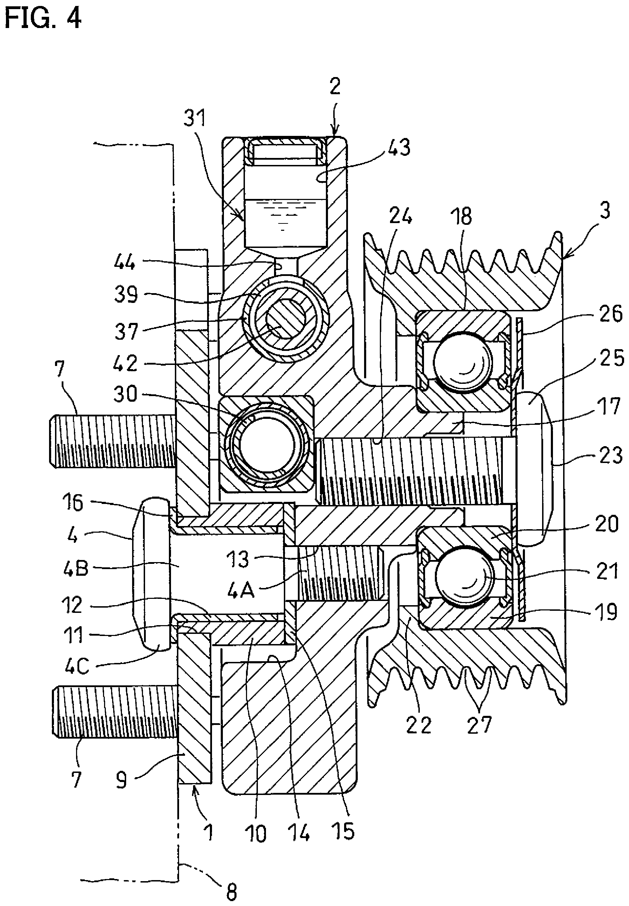

As illustrated in Figs. 2 to 4, the tensioner unit A includes a bracket 1 mounted to an engine block 8 (shown in Fig. 4); a pivot arm 2 supported so as to be pivotable relative to the bracket 1; and a tension pulley 3 mounted to the pivot arm 2.

The pivot arm 2 is supported so as to be pivotable about a fulcrum shaft 4. The tension pulley 3 is supported by the pivot arm 2 such that, when the pivot arm 2 pivots, the tension pulley 3 moves about the fulcrum shaft 4 together with the pivot arm 2. As illustrated in Fig. 2, the belt 5 is trained around the outer periphery of the tension pulley 3.

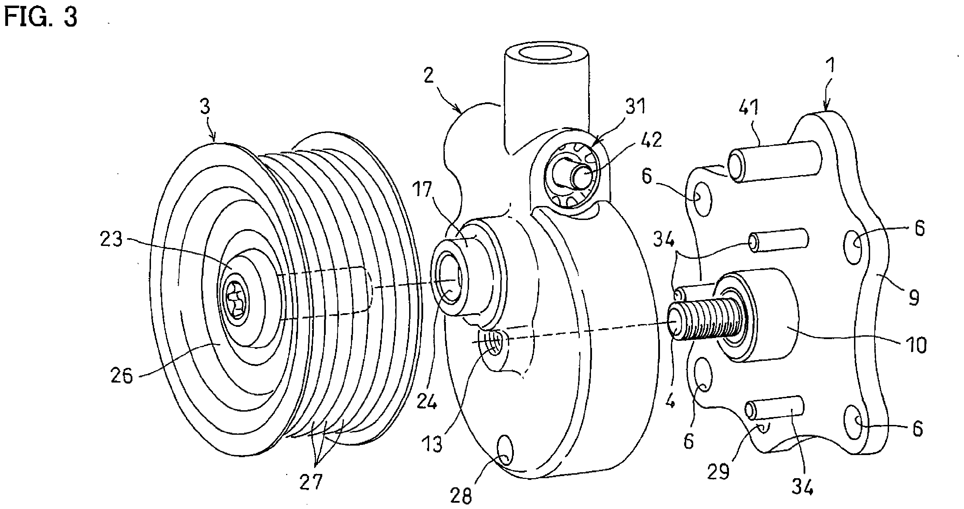

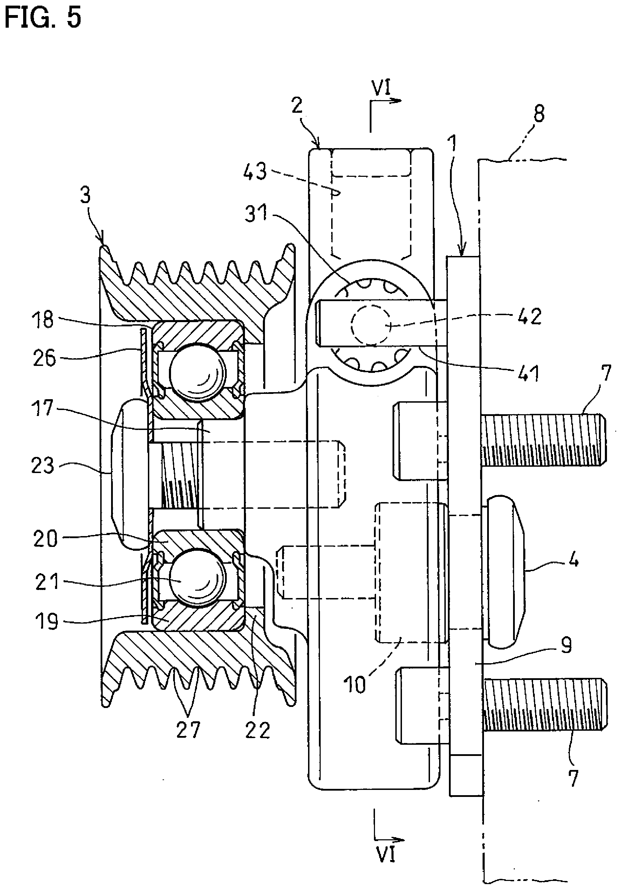

As illustrated in Fig. 3, the bracket 1 is formed with a plurality of through holes 6. As illustrated in Figs. 4 and 5, the bracket 1 is fixed to the engine block 8 by bolts 7 inserted through the respective through holes 6 (which are shown only in Fig. 3). As used herein, the terms "axially forward" and "axially rearward" refer, respectively, to the directions/locations away from and toward the engine block 8 along the direction parallel to the fulcrum shaft 4.

As illustrated in Fig. 4, the bracket 1 includes a flat plate portion 9 extending perpendicular to the axial direction, and a tubular portion 10. The tubular portion 10 is tubular in shape with both ends open. The tubular portion 10 is fixed to the flat plate portion 9 by press-fitting the outer periphery of the tubular portion 10 to the inner periphery of a through hole 11 formed in the flat plate portion 9. The tubular portion 10 protrudes beyond the axially forward surface of the flat plate portion 9 in the axially forward direction. A tubular sliding bearing 12 is fitted to the inner periphery of the tubular portion 10 to rotatably support the outer periphery of the fulcrum shaft 4.

The sliding bearing 12 rotatably supports the fulcrum shaft 4, which is fixed to the pivot arm 2. The fulcrum shaft 4 includes, from its axially forward side toward its axially rearward side, a threaded shaft portion 4A, a straight shaft portion 4B integrally connected to the threaded shaft portion 4A, and a head 4C integrally connected to the straight shaft portion 4B. The fulcrum shaft 4 is fixed to the pivot arm 2 by screwing the threaded shaft portion 4a into a threaded hole 13 formed in the axially rearward surface of the pivot arm 2. The outer diameter of the straight shaft portion 4B is larger than the outer diameter of the threaded shaft portion 4A, whereas the outer diameter of the head 4C is than the outer diameter of the straight shaft portion 4B. The outer periphery of the straight shaft portion 4B is a cylindrical surface, and this cylindrical surface is slidably supported by the inner periphery of the sliding bearing 12.

A recess 14 is formed in the axially rearward surface of the pivot arm 2 so as to surround the threaded hole 13. The tubular portion 10 of the bracket 1 is received in the recess 14. A thrust washer 15 is mounted between the axially forward end of the tubular portion 10 and the pivot arm 2. The thrust washer 15 allows the pivot arm 2 to pivot relative to the tubular portion 10 while supporting an axial load applied between the tubular portion 10 and the pivot arm 2. The sliding bearing 12 includes a flange 16 integrally formed at the axially rearward end of the sliding bearing 12 so as to be sandwiched between the axially rearward end of the tubular portion 10 and the head 4C of the fulcrum shaft 4. The flange 16 of the sliding bearing 12 allows the fulcrum shaft 4 to rotate relative to the tubular portion 10 while supporting an axial load applied between the axially rearward end of the tubular portion 10 and the head 4C of the fulcrum shaft 4.

The tension pulley 3 is axially opposed to the pivot arm 2. The pivot arm 2 includes a pulley shaft 17 protruding from the surface of the pivot arm 2 opposed to the tension pulley 3 toward the tension pulley 3 (i.e., in the axially forward direction). A rolling bearing 18 is mounted to the outer periphery of the pulley shaft 17 to rotatably support the tension pulley 3. The rolling bearing 18 includes an outer ring 19 fixed to the inner periphery of the tension pulley 3, an inner ring 20 disposed inside of the outer ring 19, and a plurality of rolling elements 21 disposed between the outer ring 19 and the inner ring 20 so as to be circumferentially spaced apart from each other. The rolling elements 21 are balls in the shown example.

The outer ring 19 is fixedly press-fitted to a cylindrical surface on the inner periphery of the tension pulley 3. The outer ring 19 is axially positioned relative to the tension pulley 3 by the contact of the axially rearward side surface of the outer ring 19 with an inwardly extending flange 22 formed on the inner periphery of the tension pulley 3.

The inner ring 20 is fixed to the pulley shaft 17 by a bolt 23. Specifically, the bolt 23 is screwed into a threaded hole 24 formed in the axially forward end of the pulley shaft 17 such that the inner ring 20 is fixed to the pulley shaft 17 by a head 25 of the bolt 23. A dust cover 26 is sandwiched between the head 25 of the bolt 23 and the axially forward side surface of the inner ring 20. The dust cover 26 is a disk-shaped member opposed to the axially forward side surface of the outer ring 19. Foreign matter entering the space between the opposed surfaces of the dust cover 26 and the outer ring 19 is discharged radially outwardly from this space by the centrifugal force applied to the foreign matter when it touches the outer ring 19.

The tension pulley 3 has, in its outer periphery, a plurality of grooves 27 for engaging protrusions formed on the belt 5. The grooves 27 are V-shaped grooves extending in the circumferential direction, and equidistantly spaced apart from each other in the axial direction. The belt 5 (see Fig. 2) is a V-ribbed belt, that is, the protrusions of the belt 5 are a plurality of ribs formed on the surface of the belt that is brought into contact with the tension pulley 3 so as to extend parallel to the direction in which the belt 5 moves.

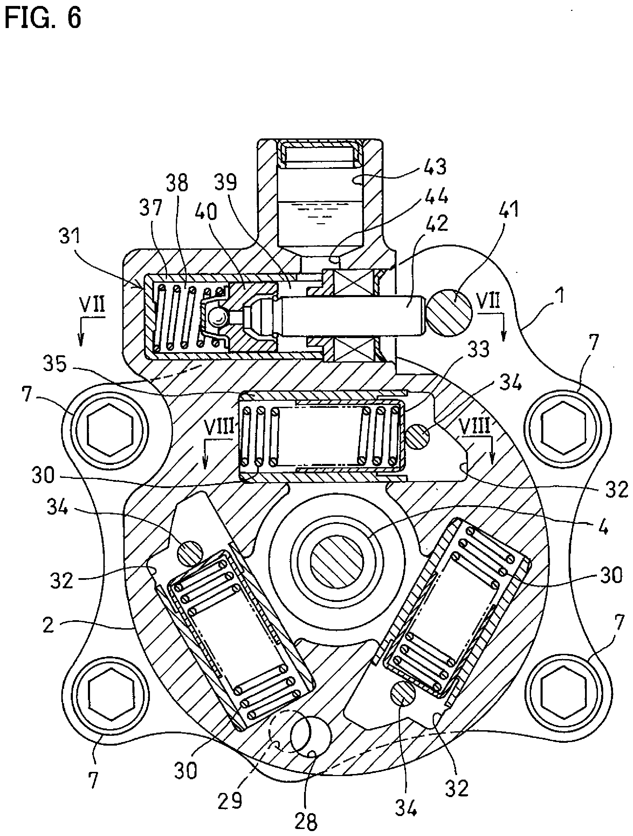

As illustrated in Fig. 6, a plurality of compression coil springs 30 and a hydraulic damper 31 are mounted in the pivot arm 2. The compression coil springs 30 are disposed around the fulcrum shaft 4 so as to be equidistantly spaced apart from each other in the circumferential direction. The compression coil springs 30 are received, respectively, in spring receiving recesses 32 formed in the pivot arm 2 and around the fulcrum shaft 4 so as to be spaced apart from each other in the circumferential direction. Each compression coil spring 30 has one end thereof supported by the inner surface of the spring receiving recess 32, and the other end thereof pressing a corresponding one of spring abutment pins 34 through a tubular cap 33. The spring abutment pins 34 are fixed in position so as to be immovable even when the pivot arm 2 pivots.

The spring abutment pins 34 are equal in number to the compression coil springs 30, and disposed around the fulcrum shaft 4 so as to be equidistantly spaced apart from each other in the circumferential direction, such that each spring abutment pin 34 corresponds to a respective compression coil spring 30. The compression coil springs 30 bias the pivot arm 2 in one of the opposite pivot directions (direction in which the tension pulley 3 presses the belt 5 (see Fig. 2)) by receiving reaction forces from the corresponding spring abutment pins 34. In other words, the pivot arm 2 is biased by the compression coil springs 30 in one of the opposite circumferential directions that extends from each spring abutment pin 34 toward its side where there is the corresponding compression coil spring 30 (counterclockwise direction in Fig. 6). Thus, the biasing forces of the compression coil springs 30 cause the tension pulley 3 (see Fig. 2) to press the belt 5.

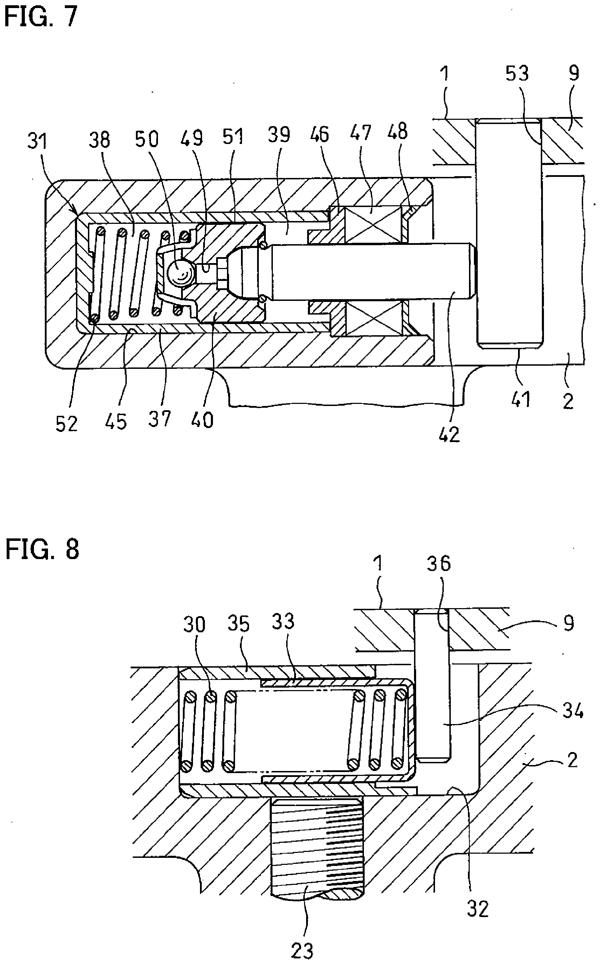

As illustrated in Fig. 8, each tubular cap 33 is slidably supported by a guide sleeve 35 disposed in the spring receiving recess 32. Each spring abutment pin 34 is fixedly press-fitted in a pin fixing hole 36 formed in the bracket 1 so as to protrude beyond the axially forward surface of the flat plate portion 9 of the bracket 1 in the axially forward direction such that its protruding portion is inserted in the spring receiving recess 32.

As illustrated in Fig. 6, the hydraulic damper 31 is mounted in the pivot arm 2 such that the hydraulic damper 31 and the compression coil springs 30 are located on a common plane orthogonal to the fulcrum shaft 4. The hydraulic damper 31 includes a tubular damper cylinder 37 provided to the pivot arm 2 such that, when the pivot arm 2 pivots, the damper cylinder 37 moves about the fulcrum shaft 4 together with the pivot arm 2; a piston 40 slidably inserted in the damper cylinder 37 to partition the interior of the damper cylinder 37 into a hydraulic chamber 38 and a reservoir chamber 39; and a damper rod 42 having one end thereof connected to the piston 40, and having the other end abutting against a damper abutment pin 41. The damper abutment pin 41 is fixed in position so as to be immovable even when the pivot arm 2 pivots.

The pivot arm 2 defines, in its interior, a sub-reservoir chamber 43 adjacent to the reservoir chamber 39 in a direction orthogonal to the longitudinal direction of the damper cylinder 37; and a communication path 44 through which the sub-reservoir chamber 43 communicates with the reservoir chamber 39. The hydraulic chamber 38 and the reservoir chamber 39 are completely filled with hydraulic oil so that no air exists in the chambers 38 and 39. On the other hand, the sub-reservoir chamber 43 contains air and hydraulic oil in two layers, i.e., upper and lower layers.

As illustrated in Fig. 7, the damper cylinder 37 is a tubular member having one end open and the other end closed. The damper cylinder 37 is fitted in a damper receiving recess 45 formed in the pivot arm 2, and is fixed in the damper receiving recess 45 by a wear ring 46 press-fitted to the inner periphery of the damper receiving recess 45. The inner periphery of the wear ring 46 slidably supports the outer periphery of the damper rod 42. An oil seal 47 is mounted in the damper receiving recess 45 such that the damper rod 42 slidably extends through the oil seal 47. A snap ring 48 is also mounted in the damper receiving recess 45 so as to retain the oil seal 47 in the damper receiving recess 45.

The piston 40 is received in the damper cylinder 37 so as to be slidable in the longitudinal direction of the damper cylinder 37. The piston 40 is formed with an oil path 49 through which the hydraulic chamber 38 communicates with the reservoir chamber 39. A check valve 50 is disposed at the end of the oil path 49 facing the hydraulic chamber 38 to allow hydraulic oil to flow only from the reservoir chamber 39 toward the hydraulic chamber 38. A minute leakage gap 51 is defined between the sliding surfaces of the piston 40 and the damper cylinder 37. A piston spring 52 is mounted in the hydraulic chamber 38 to press the piston 40 in the direction in which the volume of the hydraulic chamber 38 increases.

The damper abutment pin 41 is fixedly press-fitted in a pin fixing hole 53 formed in the bracket 1 so as to protrude beyond the axially forward surface of the flat plate portion 9 of the bracket 1 in the axially forward direction such that the distal end of the damper rod 42 is in abutment with the protruding portion of the damper abutment pin 41.

As illustrated in Fig. 6, the hydraulic damper 31 and the damper abutment pin 41 are arranged such that the circumferential direction extending from the damper abutment pin 41 toward its side where there is the hydraulic damper 31 (counterclockwise direction in the example of Fig. 6) coincides with the circumferential direction extending from each spring abutment pin 34 toward its side where there is the corresponding compression coil spring 30 (counterclockwise direction in the example of Fig. 6). With this arrangement, the hydraulic damper 31 dampens the pivoting motion of the pivot arm 2 in the pivot direction that is opposite the direction in which the compression coil springs 30 bias the pivot arm 2 (i.e., in the pivot direction in which the tension pulley 3 moves away from the belt 5 (see Fig. 2)).

The pivot arm 2 is formed with a first setting hole 28 axially extending through the pivot arm 2. The bracket 1 is formed with a second setting hole 29 open to the axially forward surface of the bracket 1. The distance between the fulcrum shaft 4 and the first setting hole 28 is equal to the distance between the fulcrum shaft 4 and the second setting hole 29. Thus, by pivoting the pivot arm 2 relative to the bracket 1 in the direction in which the compression coil springs 30 are compressed, the first and second setting holes 28 and 29 can be axially aligned. By inserting a setting pin for initial positioning (not shown) into the thus-aligned first and second set holes 28 and 29, it is possible to retain the pivot position of the pivot arm 2 relative to the bracket 1.

It is now described how the above-described tensioner unit A operates.

When the tension of the belt 5 (shown in Fig. 2) decreases, the pivot arm 2 pivots counterclockwise due to the biasing forces of the compression coil springs 30 (shown in Fig. 6), thereby absorbing the looseness of the belt 5. At this time, due to the biasing force of the piston spring 52, the piston 40 (see Figs. 6 and 7) moves in the direction in which the volume of the hydraulic chamber 38 increases. Also, the check valve 50 opens, so that hydraulic oil flows from the reservoir chamber 39 into the hydraulic chamber 38 through the oil path 49.

On the other hand, when the tension of the belt 5 (shown in Fig. 2) increases, the pivot arm 2 pivots clockwise due to the tension of the belt 5, thereby absorbing the tension of the belt 5. At this time, since the piston 40 (see Figs. 6 and 7) moves in the direction in which the volume of the hydraulic chamber 38 decreases, the check valve 50 closes, and thus hydraulic oil flows from the hydraulic chamber 38 into the reservoir chamber 39 through the leakage gap 51. As a result, a hydraulic damper force is generated by the viscous resistance of the hydraulic oil.

In the tensioner unit A of the present invention, since the compression coil springs 30 for biasing the pivot arm 2, and the hydraulic damper 31 for dampening the pivoting motion of the pivot arm 2 are separately mounted to the pivot arm 2, it is possible to reduce the installation space for the tensioner unit A when seen from its front side. Also, since compression coil springs 30 are used as springs for biasing the pivot arm 2, and the biasing force of a compression coil spring 30 is generally larger than the basing force of a torsion coil spring, it is possible to easily ensure a large pressing force required in the tensioner unit A compared to the case where torsion coil springs are used to bias the pivot arm 2.

In the tensioner unit A of the present invention, since the plurality of compression coil springs 30, which are disposed around the fulcrum shaft 4 so as to be circumferentially spaced apart from each other, bias the pivot arm 2 individually and independently of each other, it is possible to reduce the sizes of the individual compression coil springs 30, and thus to effectively reduce the installation space for the tensioner unit A when seen from its front side, while ensuring a large pressing force required in the tensioner unit A.

In the tensioner unit A of the present invention, since the compression coil springs 30 and the hydraulic damper 31 are disposed on a common plane orthogonal to the fulcrum shaft 4, it is possible to reduce the thickness of the tensioner unit A in the axal direction of the fulcrums shaft 4, even though compression coil springs 30 are used, which generally require larger installation spaces than torsion coil springs.

Since the pivot arm 2 of the tensioner unit A is formed with a sub-reservoir chamber 43 that is adjacent to the reservoir chamber 39 in a direction orthogonal to the longitudinal direction of the damper cylinder 37; and a communication path 44 through which the sub-reservoir chamber 43 communicates with the reservoir chamber 39, it is possible to reduce the length of the hydraulic damper 31, and thus to reduce the installation space for the tensioner unit A when seen from its front side.

In the tensioner unit A of the present invention, since the tension pulley 3 is axially opposed to the pivot arm 2; the pivot arm 2 is provided with a pulley shaft 17 that protrudes from the surface of the pivot arm 2 opposed to the tension pulley 3 toward the tension pulley 3; and a rolling bearing 18 is mounted to the outer periphery of the pulley shaft 17 so as to rotatably support the tension pulley 3, the tension pulley 3 overlaps with the pivot arm 2 when the tensioner unit A is seen from its front side. For this reason, too, it is possible to effectively reduce the installation space for the tensioner unit A when seen from its front side.

Since the tensioner unit A according to the present invention uses a bracket 1 to which the spring abutment pins 34 and the damper abutment pin 41 are fixed, it is possible to easily mount the tensioner unit A to the engine block 8 by simply fixing the bracket 1 to the engine block 8 without separately fixing the spring abutment pins 34 and the damper abutment pin 41 to the engine block 8.

While, in the above embodiment, the fulcrum shaft 4 is provided to the pivot arm 2, and the sliding bearing 12, which rotatably supports the fulcrum shaft 4, is provided to the bracket 1, the sliding bearing 12 may be provided to the pivot arm 2, and the fulcrum shaft 4 may be provided to the bracket 1 so as to rotatably support the pivot arm 2 through the sliding bearing 12. Also, the sliding bearing 12 may be replaced by a rolling bearing.

### DESCRIPTION OF REFERENCE NUMERALS

- 1:: bracket
- 2:: pivot arm
- 3:: tension pulley
- 4:: fulcrum shaft
- 17:: pulley shaft
- 18:: rolling bearing
- 30:: compression coil spring
- 31:: hydraulic damper
- 34:: spring abutment pin
- 37:: damper cylinder
- 38:: hydraulic chamber
- 39:: reservoir chamber
- 40:: piston
- 41:: damper abutment pin
- 42:: damper rod
- 43:: sub-reservoir chamber
- 44:: communication path
- A:: tensioner unit for an engine accessory belt

## Claims

1. A tensioner unit for an engine accessory belt, the tensioner unit comprising:
a pivot arm (2) supported so as to be pivotable about a fulcrum shaft (4);
a tension pulley (3) supported by the pivot arm (2) such that, when the pivot arm (2) pivots, the tension pulley (3) moves about the fulcrum shaft (4) together with the pivot arm (2);
at least one spring abutment pin (34) and a damper abutment pin (41) each fixed in position so as to be immovable even when the pivot arm (2) pivots; and
a hydraulic damper (31) mounted to the pivot arm (2) so as to be in contact with the damper abutment pin (41), and configured to dampen a pivoting motion of the pivot arm (2) in the other of the two opposite pivot directions,
**characterized by** at least one compression coil spring (30) mounted to the pivot arm (2), and pressing the spring abutment pin (34) so as to bias the pivot arm (2) in one of two opposite pivot directions by receiving a reaction force from the spring abutment pin (34); wherein the at least one compression coil spring (30) comprises a plurality of compression coil springs (30) disposed around the fulcrum shaft (4) so as to be circumferentially spaced apart from each other, and
wherein the at least one spring abutment pin (34) comprises a plurality of spring abutment pins (34) corresponding, respectively, to the plurality of compression coil springs (30).

2. The tensioner unit according to claim 1, wherein the hydraulic damper (31), and either the compression coil spring (30) according to claim 1 or the plurality of compression coil springs (30) are disposed on a common plane orthogonal to the fulcrum shaft (4).

3. The tensioner unit according to claim 1 or 2, wherein the hydraulic damper (31) comprises:
a tubular damper cylinder (37) provided to the pivot arm (2) such that, when the pivot arm (2) pivots, the tubular damper cylinder (37) moves about the fulcrum shaft (4) together with the pivot arm (2);
a piston (40) slidably inserted in the tubular damper cylinder (37) so as to partition an interior of the tubular damper cylinder (37) into a hydraulic chamber (38) and a reservoir chamber (39); and
a damper rod (42) having one end thereof connected to the piston (40), and having the other end abutting against the damper abutment pin (41).

4. The tensioner unit according to claim 3, wherein the pivot arm (2) includes, in an interior of the pivot arm (2), a sub-reservoir chamber (43) adjacent to the reservoir chamber (39) in a direction orthogonal to a longitudinal direction of the tubular damper cylinder (37); and
a communication path (44) through which the sub-reservoir chamber (43) communicates with the reservoir chamber (39).

5. The tensioner unit according to any of claims 1 to 4, wherein the tension pulley (3) is axially opposed to the pivot arm (2);
wherein the pivot arm (2) includes a pulley shaft (17) protruding from a surface of the pivot arm (2) opposed to the tension pulley (3) toward the tension pulley (3); and
wherein the tensioner unit further comprises a rolling bearing (18) mounted to an outer periphery of the pulley shaft (17) so as to rotatably support the tension pulley (3).

6. The tensioner unit according to any of claims 1 to 5, further comprising a bracket (1) to which the damper abutment pin (41), and either the spring abutment pin (34) according to claim 1 or the plurality of spring abutment pins (34) are fixed.

## Patentansprüche

1. Spann-Einheit für einen Motornebenaggregat-Riemen, wobei die Spann-Einheit umfasst:
einen Schwenkarm (2), der so gelagert ist, dass er um eine Drehwelle (4) herum geschwenkt werden kann;
eine Spannrolle (3), die von dem Schwenkarm (2) so getragen wird, dass sich die Spannrolle (3) beim Schwenken des Schwenkarms (2) zusammen mit dem Schwenkarm (2) um die Drehwelle (4) herum bewegt;
wenigstens einen Feder-Anschlagbolzen (34) und einen Dämpfer-Anschlagbolzen (41), die jeweils in ihrer Position so fixiert sind, dass sie selbst dann unbeweglich sind, wenn der Schwenkarm (2) geschwenkt wird;
sowie
einen hydraulischen Dämpfer (31), der an dem Schwenkarm (2) so angebracht ist, dass er mit dem Dämpfer-Anschlagbolzen(41) in Kontakt ist, und so ausgeführt ist, dass er eine Schwenkbewegung des Schwenkarms (2) in der anderen der zwei entgegengesetzten Schwenkrichtungen dämpft,
**gekennzeichnet durch** wenigstens eine Druck-Schraubenfeder (30), die an dem Schwenkarm (2) angebracht ist und den Feder-Anschlag Bolzen (34) so drückt, dass der Schwenkarm (2) durch Aufnehmen einer Gegenwirkungskraft von dem Feder-Anschlagbolzen (34) in eine von zwei entgegengesetzten Schwenkrichtungen vorgespannt wird, wobei die wenigstens eine Druck-Schraubenfeder (30) eine Vielzahl von Druck-Schraubenfedern (30) umfasst, die so um die Drehwelle (4) herum angeordnet sind, dass sie in Umfangsrichtung voneinander beabstandet sind, und
der wenigstens eine Feder-Anschlagbolzen (34) eine Vielzahl von Feder-Anschlagbolzen (34) umfasst, die jeweils der Vielzahl von Druck-Schraubenfedern (30) entsprechen.

2. Spann-Einheit nach Anspruch 1, wobei der hydraulische Dämpfer (31) und entweder die Druck-Schraubenfeder (30) nach Anspruch 1 oder die Vielzahl von Druck-Schraubenfedern (30) auf einer gemeinsamen Ebene im rechten Winkel zu der Drehwelle (4) angeordnet sind.

3. Spann-Einheit nach Anspruch 1 oder 2, wobei der hydraulische Dämpfer (31) umfasst:
einen röhrenförmigen Dämpf-Zylinder (37), der an dem Schwenkarm (2) vorhanden ist, so dass sich der röhrenförmige Dämpf-Zylinder (37) beim Schwenken des Schwenkarms (2) zusammen mit dem Schwenkarm (2) um die Drehwelle (4) herum bewegt;
einen Kolben (40), der gleitend so in den röhrenförmigen Dämpf-Zylinder (37) eingeführt ist, dass er einen Innenraum des röhrenförmigen Dämpf-Zylinders (37) in eine Hydraulickammer (38) und eine Speicherkammer (39) unterteilt; sowie
eine Dämpf-Stange (42), deren eines Ende mit dem Kolben (40) verbunden ist und deren anderes Ende an dem Dämpfer-Anschlagbolzen (41) anliegt.

4. Spann-Einheit nach Anspruch 3, wobei der Schwenkarm (2) in einem Inneren des Schwenkarms (2) eine Neben-Speicherkammer (43) einschließt, die in einer Richtung im rechten Winkel zu einer Längsrichtung des röhrenförmigen Dämpf-Zylinders (37) an die Speicherkammer (39) angrenzt; sowie
einen Verbindungsweg (44), über den die Neben-Speicherkammer (43) mit der Speicherkammer (39) in Verbindung steht.

5. Spann-Einheit nach einem der Ansprüche 1 bis 4, wobei die Spannrolle (3) dem Schwenkarm (2) axial gegenüberliegt;
der Schwenkarm (2) eine Scheiben-Welle (17) enthält, die von einer der Spannrolle (3) gegenüberliegenden Fläche des Schwenkarms (2) in Richtung der Spannrolle (3) vorsteht; und
die Spann-Einheit des Weiteren ein Wälzlager (18) umfasst, das an einem Außenumfang der Scheiben-Welle (17) angebracht ist, um die Spannrolle (3) drehbar zu lagern.

6. Spann-Einheit nach einem der Ansprüche 1 bis 5, die des Weiteren einen Träger (1) umfasst, an dem der Dämpfer-Anschlagbolzen (41) und entweder der Feder-Anschlagbolzen (34) nach Anspruch 1 oder die Vielzahl von Feder-Anschlagbolzen (34) befestigt sind.

## Revendications

1. Unité de tendeur pour courroie d'accessoire de moteur, l'unité de tendeur comprenant :
un bras pivotant (2) supporté de manière à pouvoir pivoter autour d'un arbre d'appui (4) ;
une poulie de tension (3) supportée par le bras pivotant (2) de sorte que, lorsque le bras pivotant (2) pivote, la poulie de tension (3) se déplace autour de l'arbre d'appui (4) conjointement avec le bras pivotant (2) ;
au moins une broche de butée de ressort (34) et une broche de butée d'amortisseur (41) chacune fixée en position de manière à être immobile même lorsque le bras pivotant (2) pivote :
un amortisseur hydraulique (31) monté sur le bras pivotant (2) de manière à être en contact avec la broche de butée d'amortisseur (41), et configuré pour amortir un mouvement de pivotement du bras pivotant (2) dans l'autre des deux directions de pivotement opposées,
**caractérisée par** au moins un ressort hélicoïdal de compression (30) monté sur le bras pivotant (2), et pressant la broche de butée de ressort (34) de manière à solliciter le bras pivotant (2) dans l'une des deux directions de pivotement opposées en recevant une force de réaction de la broche de butée de ressort (34) ; dans laquelle
l'au moins un ressort hélicoïdal de compression (30) comprend une pluralité de ressorts hélicoïdaux de compression (30) disposés autour de l'arbre d'appui (4) de manière à être espacés circonférentiellement les uns des autres, et
dans laquelle l'au moins une broche de butée de ressort (34) comprend une pluralité de broches de butée de ressort (34) correspondant, respectivement, à la pluralité de ressorts hélicoïdaux de compression (30).

2. Unité de tendeur selon la revendication 1, dans laquelle l'amortisseur hydraulique (31) et soit le ressort hélicoïdal de compression (30) selon la revendication 1, soit la pluralité de ressorts hélicoïdaux de compression (30) sont disposés sur un plan commun orthogonal à l'arbre d'appui (4).

3. Unité de tendeur selon la revendication 1 ou 2, dans laquelle l'amortisseur hydraulique (31) comprend :
un cylindre d'amortisseur tubulaire (37) prévu sur le bras pivotant (2) de sorte que, lorsque le bras pivotant (2) pivote, le cylindre d'amortisseur tubulaire (37) se déplace autour de l'arbre d'appui (4) conjointement avec le bras pivotant (2) ;
un piston (40) inséré en coulissement dans le cylindre d'amortisseur tubulaire (37) de manière à diviser la partie intérieure du cylindre d'amortisseur tubulaire (37) en une chambre hydraulique (38) et une chambre de réservoir (39) ; et
une tige d'amortisseur (42) dont une extrémité est reliée au piston (40) et dont l'autre extrémité est en butée contre la broche de butée d'amortisseur (41).

4. Unité de tendeur selon la revendication 3, dans laquelle le bras pivotant (2) comporte, à l'intérieur du bras pivotant (2), une chambre de sous-réservoir (43) adjacente à la chambre de réservoir (39) dans une direction orthogonale à une direction longitudinale du cylindre d'amortisseur tubulaire (37) ; et
un chemin de communication (44) à travers lequel la chambre de sous-réservoir (43) communique avec la chambre de réservoir (39).

5. Unité de tendeur selon l'une des revendications 1 à 4, dans laquelle la poulie de tension (3) est axialement opposée au bras pivotant (2) ;
dans laquelle le bras pivotant (2) comporte un arbre de poulie (17) faisant saillie à partir d'une surface du bras pivotant (2) opposée à la poulie de tension (3) vers la poulie de tension (3) ; et
dans laquelle l'unité de tendeur comprend en outre un palier à roulement (18) monté sur une périphérie externe de l'arbre de poulie (17) de manière à supporter en rotation la poulie de tension (3).

6. Unité de tendeur selon l'une des revendications 1 à 5, comprenant en outre un support (1) auquel la broche de butée d'amortisseur (41), et soit la broche de butée de ressort (34) selon la revendication 1, soit la pluralité de broches de butée de ressort (34) sont fixées.
